# EUROPÄISCHE PATENTANMELDUNG

(11) **EP 2 246 755 A1**
(43) Veröffentlichungstag der Anmeldung: **03.11.2010**
(21) Anmeldenummer: 09005626.8
(22) Anmeldetag: 22.04.2009
(51) Int. Cl.: G05B 13/04, G05B 13/02

(54) **Regelkreis**

(71) Anmelder: Powitec Intelligent Technologies GmbH, 45219 Essen (DE)
(72) Erfinder: Wintrich, Franz, 45309 Essen (DE); Stephan, Volker, 99976 Hüpstedt (DE)
(74) Vertreter: Patentanwälte Hosenthien-Held und Dr. Held

(57) **Zusammenfassung**

Bei einem Regelkreis (1), insbesondere zu Regelung eines Verbrennungsprozesses in einem Kraftwerk, einer Müllverbrennungsanlage oder einem Zementwerk, mit einer Regelstrecke (4) und einem aktiven Regler (6), ist ein Hauptregler (10) vorgesehen, welcher die Regelstrecke (4) simulierende Simulatoren (S₁, S₂, .... Sₙ) trainiert und daran eine zu entwickelnde Menge von Reglern ({Cᵢ, C₆}) testet, um den besten Regler (C₁) aufzufinden und mit dem aktiven Regler (6) zu vergleichen und gegebenenfalls zu ersetzen, wobei die Menge von Reglern ({Cᵢ, C₆}) auch Regler (C₆) enthält, die früher aktive Regler (6) waren.

## Beschreibung

Die Erfindung betrifft einen Regelkreis mit den Merkmalen des Oberbegriffs des Anspruches 1.

Bei einem aus der EP 1 396 770 B1 bekannten Regelkreis werden im Hintergrund Prozessmodelle der Regelstrecke entwickelt und dabei trainiert. Sofern das beste neue Prozessmodell eine höherer Genauigkeit der Prognosen als das im aktiven Regler eingesetzte Prozessmodell liefert, wird letzteres durch das beste neue Prozessmodell ersetzt, wodurch ein neuer aktiver Regler entsteht. Das bisher eingesetzte und die anderen neuen Prozessmodelle werden verworfen.

Der vorliegenden Erfindung liegt die Aufgabe zugrunde, einen Regelkreis der eingangs genannten Art zu verbessern. Diese Aufgabe wird durch einen Regelkreis mit den Merkmalen des Anspruches 1 gelöst. Weitere vorteilhafte Ausgestaltungen sind Gegenstand der Unteransprüche.

Bei einer entsprechenden Betriebsdauer des Regelkreis liegen ausreichend viele Daten vor, um ausreichend gute Simulatoren zu schaffen, welche die Regelstrecke mit unterschiedlich konfigurierten Prozessmodelle simulieren. Mit dem Einsatz von Simulatoren kann eine Menge von alten und neuen Regler getestet werden, bevor ein Einsatz an der Regelstrecke erfolgt. Ein Störung des laufenden Betriebs des Regelkreises wird dadurch vermieden. Die Verwendung mehrere Simulatoren reduziert Fehler und Abweichungen vom realen Verhalten der Regelstrecke und berücksichtigt unterschiedliche Situationen besser. Ein entsprechend entwickelter Regler beruht somit auf mehreren Prozessmodellen. Es wird vorzugsweise derjenige Regler gesucht, mit dem die Sollwerte am besten zu erreichen sind. Die Beibehaltung früher aktiver Regler erleichtert bei einer Wiederkehr bestimmter Zustände und Zeitverläufe die Entwicklung des besten Reglers. Zudem werden Rechenzeiten und -leistungen gespart. Das Training der Simulatoren und die Entwicklung eine Menge von Reglern wird von einem Hauptregler vorgenommen und überwacht, vorzugsweise in bestimmten Zyklen, die auf die Dynamik der Regelstrecke abgestimmt sind. Optimierungen des Regelkreises sind durch zusätzliche Informationen, insbesondere Bildverarbeitung, möglich und gehen beispielsweise in die Simulatoren und/oder in die Entwicklung der Regler und/oder in die Sollwerte ein.

Die Erfindung kann bei verschiedenen stationären thermodynamischen Anlagen, insbesondere Kraftwerken, Müllverbrennungsanlagen und Zementwerken, eingesetzt werden. Ein Einsatz des erfindungsgemäßen Regelkreises ist auch in anderen technischen Gebieten denkbar.

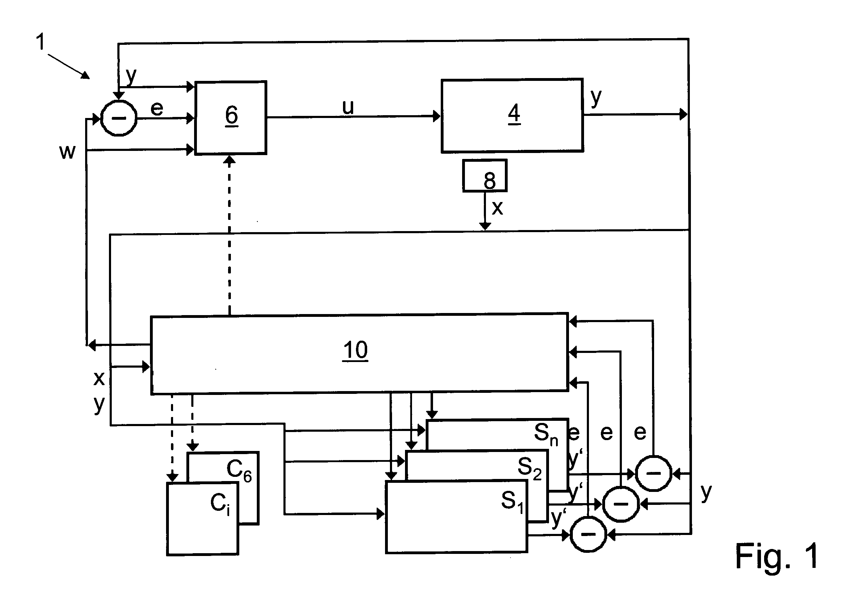

Im folgenden ist die Erfindung anhand eines in der Zeichnung dargestellten Ausführungsbeispiels näher erläutert. Es zeigen
- Fig. 1: eine schematische Darstellung des Ausführungsbeispiels während des Trainings der Simulatoren, und

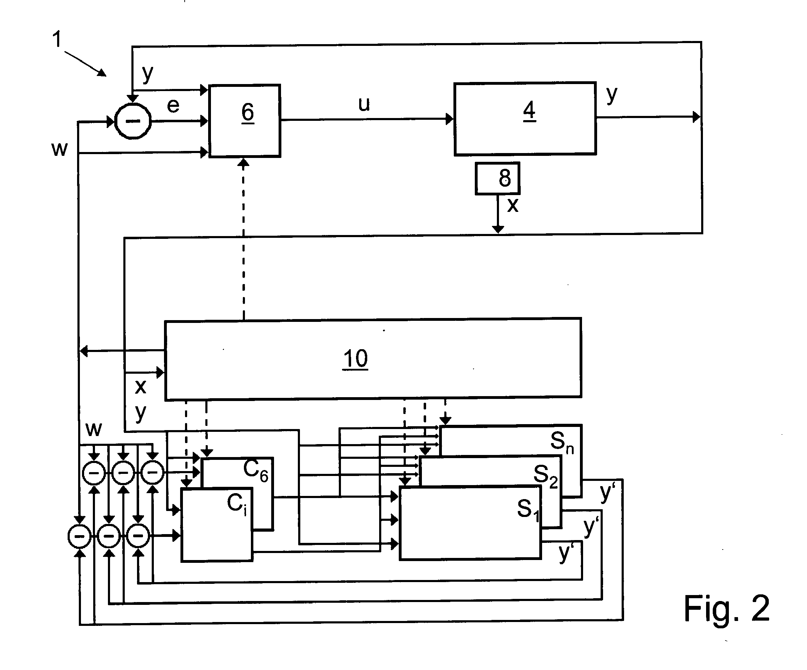

- Fig. 2: eine schematische Darstellung des Ausführungsbeispiels während der Entwicklung der Menge von Reglern.

Ein Regelkreis 1 weist eine Regelstrecke 4 und einen aktiven Regler 6 auf. Die Regelstrecke 4 umfasst vorzugsweise ein Ofen (oder ein Rost) eines Kohle-, Öl- oder Gaskraftwerks, einer Müllverbrennungsanlage oder eines Zementwerks, dessen Verbrennungsprozess der Regelkreis 1 regeln soll. Die Regelstrecke 4 umfasst auch die zugehörigen Stellvorrichtungen, insbesondere für die Zufuhr von Brennstoff oder anderem umzusetzenden Material, beispielsweise Kohle, Öl, Gas, Müll, Kalk oder dergleichen, sowie von Primärluft (bzw. -sauerstoff) und Sekundärluft (bzw. -Sauerstoff).

Die Regelstrecke 4 umfasst ferner verschiedene Messvorrichtungen, beispielsweise für Emissionsparameter und die Zufuhrraten der Stellvorrichtungen, deren Messungen den (vektoriellen) Istwert y liefern, welcher (zeitabhängig) den aktuellen Zustand der Regelstrecke 4 beschreibt (d.h. die Zustandsvariablen). Dieser Istwert y ist mit einem (vektoriellen) Sollwert w zu vergleichen, welcher den gewünschten Zustand der Regelstrecke 4 beschreibt. Aus der Regelabweichung e, also der (vektorielle) Differenz des Istwertes y vom Sollwert w, ermittelt der aktive Regler 6 die (vektorielle) Stellgröße u, mit der die Stellvorrichtungen der Regelstrecke 4 angesteuert werden. Der Regelkreis 1 kann außer auf diese Sollwerte w alternativ auf einen stabilen Prozess (d.h. einen ruhigen, quasistationären Betrieb des Regelkreises 1) hin regelbar sein oder auf eine Kombination. Die mit der Stellgröße u vorgenommenen Stelleingriffe sowie etwaige Störungen können gemeinsam als Aktionen (gewollte und ungewollte Aktionen) behandelt werden, welche auf die Regelstrecke 4 einwirken.

Außer dem Istwert y erhält der aktive Regler 6 weitere Merkmale x, die von wenigstens einer zusätzlichen Beobachtungsvorrichtung stammen, die den Verbrennungsprozess in der Regelstrecke 4, insbesondere den Flammenkörper, laufend bildlich erfasst. Die Beobachtungsvorrichtung umfasst neben einem die Wand des Ofens durchdringenden optischen Zugang, wie beispielsweise einer Lanze oder einer in der EP 1 621 813 A1 (deren diesbezüglicher Offenbarungsgehalt ausdrücklich einbezogen wird) offenbarten Vorrichtung, noch eine Kamera oder dergleichen, welche im optischen Bereich oder benachbarten Bereichen elektromagnetischer Wellen arbeitet. Bevorzugt wird eine zeitlich, örtlich und spektral hochauflösende Kamera, wie sie beispielsweise in der WO 02/070953 A1 beschrieben ist, deren diesbezüglicher Offenbarungsgehalt ausdrücklich einbezogen wird. Die Daten der Beobachtungsvorrichtung, also die Bilder des Flammenkörpers und der eventuellen Emissionen der Wände des Ofens werden in einem Merkmalsextraktor 8 mittels Bildverarbeitung ausgewertet, beispielsweise nach einem Eigenwert-Verfahren, das in der WO 2004/018940 A1 beschrieben ist, deren diesbezüglicher Offenbarungsgehalt ausdrücklich einbezogen wird, und/oder mittels Informationsmaßes, wie in der EP 1 967 792 A1 beschrieben ist, deren diesbezüglicher Offenbarungsgehalt ebenfalls ausdrücklich einbezogen wird. Der Merkmalsextraktor 8 liefert dann die daraus ermittelten Merkmale x.

Um die Regelung zu optimieren, wird für die Regelung ein rekurrentes neuronales Netzwerk verwendet, welches mittels eines evolutionären Ansatzes trainiert wird, der als Optimierungskriterium die mittlere Regelabweichung e minimiert.

Erfindungsgemäß ist hierfür außer dem aktiven Regler 6 noch ein Hauptregler 10 vorgesehen, welcher mehrere Simulatoren S₁, S₂, .... Sₙ verwaltet, die jeweils ein Modell der Regelstrecke 4 darstellen und diese simulieren. Die Simulatoren S₁, S₂, .... Sₙ beruhen auf - insbesondere in Hinblick auf unterschiedliche Situationen - unterschiedlich konfigurierten Prozessmodellen für den Verbrennungsprozess der Regelstrecke. Es ist jederzeit möglich, weitere Simulatoren Sᵢ hinzuzufügen oder zu entfernen.

Der Hauptregler 10 trainiert zunächst die einzelnen Simulatoren S₁, S₂, .... Sₙ evolutionär mittels eines rekurrenten neuronalen Netzwerkes, indem die Abweichung der Prognose y' für den Istwert y vom realen Istwert y eine "Fitness" definiert, die jeweils zu optimieren ist. Die Simulatoren S₁, S₂, .... Sₙ erhalten dabei außer dem realen Istwert y auch die weiteren Merkmale x. Sind alle Simulatoren S₁, S₂, .... Sₙ ausreichend trainiert, können sie das Verhalten der Regelstrecke 4 für unterschiedliche Verläufe der Stellgrößen u approximieren. Aufgrund der unterschiedlichen Konfiguration ist davon auszugehen, dass nicht alle Simulatoren S₁, S₂, .... Sₙ die gleichen Fehler machen, sondern dass die Gesamtheit der Simulatoren S₁, S₂ ..... Sₙ ein besseres Modell der Regelstrecke 4 darstellt als jeder einzelne Simulator Sᵢ.

Der Hauptregler 10 entwickelt nun eine Menge von Reglern {Cᵢ, C₆}, bestehend aus neuen Reglern Cᵢ, welche evolutionären Suchstrategien unterworfen werden, und aus allen Reglern C₆, die früher aktive Regler 6 waren und die von den evolutionären Suchstrategien für neue Regler Cᵢ ausgenommen sind. Der Hauptregler 10 testet die Menge von Reglern {Cᵢ, C₆} an den Simulatoren Sᵢ, S₂, .... Sₙ. Es wird derjenige Regler Cᵢ oder C₆ gesucht, der im Mittel über alle verwendeten Simulatoren S₁, S₂, .... Sₙ deren Prognosen y' im Zeitverlauf am besten mit den Verläufen der Sollwerte w in Übereinstimmung bringt (d.h derjenige Regler, mit dem die Sollwerte w am besten zu erreichen sind). Die "Fitness" eines solchen Reglers Cᵢ oder C₆ ergibt sich daher aus den (simulierten) Regelabweichungen e des Reglers Cᵢ oder C₆ in geschlossenen Regelkreisen an allen Simulatoren S₁, S₂, .... Sₙ. Auch hierbei werden die Merkmale x berücksichtigt. Der so aufgefundene Regler Cᵢ oder C₆ sei als bester Regler C₁ bezeichnet.

Der beste Regler C₁ wird nun mit dem aktiven Regler 6 verglichen, beispielsweise hinsichtlich der mittleren Regelabweichung e. Je nach zeitlicher Entwicklung des Zustandes der Regelstrecke 4 kann es sein, dass der beste Regler C₁ auch besser als der aktive Regler 6 ist. Der Hauptregler 10 ersetzt dann den aktiven Regler 6 durch den besten Regler C₁. Der bisherige aktive Regler 6 kehrt in die Menge von Reglern {Cᵢ, C₆} zurück. Sofern irgendwann wieder ein Zustand der Regelstrecke 6 erreicht wird, für den dieser frühere aktive Regler C₆ bereits gut war, wird er auch im Test an den Simulatoren S₁, S₂, .... Sₙ eine sehr hohe "Fitness" erhalten und wieder zum aktiven Regler 6 werden.

Der Hauptregler 10 nimmt das Training der Simulatoren S₁, S₂, .... Sₙ und das Testen der Menge von Reglern {Cᵢ, C₆} in bestimmten Zyklen mit dem jeweils aktuellen Istwert y (und den aktuellen Merkmalen x) vor, beispielsweise alle acht Stunden, um einen an die mittelfristigen zeitlichen Änderungen des Zustandes der Regelstrecke 4 angepassten aktiven Regler 6 zu erhalten.

### Bezugszeichenliste

- 1: Regelkreis
- 4: Regelstrecke
- 6: aktiver Regler
- 8: Merkmalsextraktor
- 10: Hauptregler
- Cᵢ: Regler
- e: Regelabweichung
- Sᵢ: Simulator
- u: Stellgröße
- w: Sollwert
- x: Merkmal
- y: Istwert
- y': Prognose des Istwertes
- { }: Menge

## Patentansprüche

1. Regelkreis, insbesondere zu Regelung eines Verbrennungsprozesses in einem Kraftwerk, einer Müllverbrennungsanlage oder einem Zementwerk, mit einer Regelstrecke (4) und einem aktiven Regler (6), **dadurch gekennzeichnet, dass** ein Hauptregler (10) vorgesehen ist, welcher die Regelstrecke (4) simulierende Simulatoren (S₁, S₂, .... Sₙ) trainiert und daran eine zu entwickelnde Menge von Reglern ({Cᵢ, C₆}) testet, um den besten Regler (C₁) aufzufinden und mit dem aktiven Regler (6) zu vergleichen und gegebenenfalls zu ersetzen, wobei die Menge von Reglern ({Cᵢ, C₆}) auch Regler (C₆) enthält, die früher aktive Regler (6) waren.

2. Regelkreis nach Anspruch 1, **dadurch gekennzeichnet, dass** der aktive Regler (6) aus der Regelabweichung (e) zwischen Istwert (y) der Regelstrecke (4) und Sollwert (w) die Stellgröße (u) ermittelt.

3. Regelkreis nach Anspruch 1 oder 2, **dadurch gekennzeichnet, dass** der aktive Regler (6) auf einem rekurrenten neuronalen Netzwerk beruht.

4. Regelkreis nach einem der vorhergehenden Ansprüche, **dadurch gekennzeichnet, dass** ein Merkmalsextraktor (8) vorgesehen ist, der eine Bildverarbeitung der Regelstrecke (4) vornimmt und daraus Merkmale (x) ermittelt.

5. Regelkreis nach einem der vorhergehenden Ansprüche, **dadurch gekennzeichnet, dass** der Hauptregler (10) die einzelnen Simulatoren (S₁, S₂, .... Sₙ) evolutionär mittels eines rekurrenten neuronalen Netzwerkes trainiert, indem die Abweichung der Prognose (y') für den Istwert (y) vom realen Istwert (y) eine Fitness definiert, die jeweils zu optimieren ist.

6. Regelkreis nach einem der vorhergehenden Ansprüche, **dadurch gekennzeichnet, dass** der Hauptregler (10) die Menge von Reglern ({Cᵢ, C₆}) an den Simulatoren (S₁, S₂, .... Sₙ) testet, indem derjenige Regler (Qᵢ, C₆) gesucht wird, der im Mittel über alle verwendeten Simulatoren (S₁, S₂, .... Sₙ) deren Prognosen (y') im Zeitverlauf am besten mit den Verläufen der Sollwerte (w) in Übereinstimmung bringt.

7. Regelkreis nach Anspruch 6, **dadurch gekennzeichnet, dass** die Fitness eines Regler (Cᵢ, C₆) aus der Menge von Reglern ({Cᵢ, C₆}) sich aus den simulierten Regelabweichungen (e) des Reglers (Cᵢ, C₆) in geschlossenen Regelkreisen an allen Simulatoren (S₁, S₂, .... Sₙ) ergibt.

8. Regelkreis nach einem der vorhergehenden Ansprüche, **dadurch gekennzeichnet, dass** die Regler (C₆), die früher aktive Regler (6) waren, von den evolutionären Suchstrategien für neue Regler (Cᵢ) ausgenommen sind.

9. Regelkreis nach einem der vorhergehenden Ansprüche, **dadurch gekennzeichnet, dass** der Hauptregler (10) in bestimmten Zyklen die Simulatoren (S₁, S₂, .... Sₙ) trainiert und daran die Menge von Reglern ({Cᵢ, C₆}) testet.
